(19) Europäisches Patentamt
European Patent Office
Office européen des brevets

(11) **EP 3 975 452 A1**

(12) **EUROPEAN PATENT APPLICATION**

(43) Date of publication:
**30.03.2022 Bulletin 2022/13**

(21) Application number: **20198247.7**

(22) Date of filing: **24.09.2020**

(51) International Patent Classification (IPC):
**H04B 11/00** $^{(2006.01)}$      **H04B 13/02** $^{(2006.01)}$
**H04N 19/00** $^{(2014.01)}$

(52) Cooperative Patent Classification (CPC):
**H04B 13/02; H04B 11/00; H04N 19/59**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **ATLAS ELEKTRONIK GmbH**
**28309 Bremen (DE)**

• **thyssenkrupp AG**
**45143 Essen (DE)**

(72) Inventor: **Christensen, Jesper**
**2400 København NV (DK)**

(74) Representative: **thyssenkrupp Intellectual Property GmbH**
**ThyssenKrupp Allee 1**
**45143 Essen (DE)**

(54) **A WATERBORNE SOUND RECEIVER AND A SYSTEM FOR TRANSMITTING IMAGE DATA USING A WATERBORNE SOUND SIGNAL**

(57) A waterborne sound receiver is disclosed, comprising a receiving unit and a decoder. The receiving unit is configured to receive a waterborne sound signal comprising compressed image data having a first resolution and to convert the waterborne sound signal into a data stream. The decoder is configured to decode the data stream as to obtain the compressed image data. The decoder is further configured to upsample the image data as to obtain image data having a second resolution which is higher than the first resolution, wherein the decoder is implemented as a neural network.

Fig. 1

**EP 3 975 452 A1**

**Description**

The present application is directed to a concept for transmitting image data using underwater (acoustic) communication.

Low-bandwidth communication, such as underwater acoustic communication, is limited by best-case data rates of 30-50 kbit/s. This renders such channels unusable or inefficient at best for single image, video, or other bandwidth-demanding sensor-data transmission.

Single Image Super-Resolution (SISR) aims at recovering a high-resolution (HR) image from a single low-resolution (LR) one. That is to reconstruct a HR image with high Peak Signal-to-Noise Ratio (PSNR) and comparable perceptual pleasantness to the original HR image. An early solution that remains generally applied is using interpolation. This is to increase the spatial size of a LR image and estimate missing pixel values by some interpolation method, e.g. nearest neighbor, bilinear, or bicubic. However, while being a popular choice, these interpolation methods lack the ability to generate high-quality results. The images tend to become blurry and are without sufficient high-frequency details. Deep neural networks have recently become popular for SISR and have seen continuous improvements over the past years. Since neural networks become more popular, first attempts to reconstruct LR images using neural networks have been performed. However, none of these attempts were suitable to recover an LR image sent using underwater communication.

Thus, the object of the present invention is to provide a concept for improved image transmission using underwater communication.

This object is solved by the subject matter of the independent claims. Further advantageous implementations are described in the dependent claims.

A specific use-case in mind is a domain-specific image transmission using underwater acoustic links during trawl fishing operations. However, the image data may alternatively comprise one or more sonar images or optical images.

Embodiments show a waterborne sound receiver comprising a receiving unit and a decoder. The receiving unit is configured to receive a waterborne sound signal comprising compressed image data having a first resolution and to convert the waterborne sound signal into a data stream. The waterborne sound signal may also be referred to as underwater communication signal. The waterborne sound signal may be send using a (underwater) sound transmitter, e.g. a hydrophone having a respective signal processing unit. The receiving unit may also be a hydrophone having a respective signal processing unit. The waterborne sound transmitter or the waterborne sound receiver may each also be referred to as underwater modems.

The decoder is configured to decode the data stream as to obtain the compressed image data. Furthermore, the decoder is configured to upsample the image data as to obtain image data having a second resolution which is higher than the first resolution. The decoder is implemented as a neural network. This is advantageous to obtain good reconstruction results of the HR image. If it is referred to a "neural network" in the following, a convolutional neural network is meant.

It is an idea to use a neural network to reconstruct a high resolution image of e.g. 256x256 pixel from a low resolution image that can be transmitted using waterborne sound. To transmit an image using waterborne sound, the image should be as small as possible to use as little bandwidth as possible.

Therefore, according to embodiments, the compressed image data is less than 1500 bytes, preferably less than 1100 bytes, more preferably less than 800 bytes or most preferably less than 500 bytes. In another embodiment, the image data having the first resolution comprises at most 1025 pixel (e.g. 32x32 pixel), preferably at most 600, more preferably at most 300 pixel. These embodiments are advantageous since those images are suitable for transmission using waterborne sound.

According to embodiments, the decoder is configured to upsample the image data at least 8 times, preferably at least 10 times, more preferably at least 14 times, most preferably at least 18 times as to obtain the image data having the second resolution. This is advantageous as to obtain a high resolution image from the very small transmitted image data having the first resolution, e.g. at most 1025 pixel or even less.

According to further embodiments, the waterborne sound signal comprises a sequence of compressed image data, wherein one image data of the sequence of image data represents one image and wherein the sequence comprises at least 5, preferably at least 8, more preferably at least 10 or most preferably at least 14 compressed images per second. In other words, a sequence of said number of images per second received by the receiving unit. The decoder is configured to decode the compressed images as to obtain a video signal of the second resolution from the sequence of compressed images. The video signal therefore comprises a respective framerate. To transmit a video signal, each image has to meet certain requirements, e.g. a maximum size in terms of the memory requirement depending on the current or at least the expected bandwidth. This size, i.e. the amount of memory the image would require, is also referred to as size footprint.

According to further embodiments, the decoder is configured to upsample the image data as a whole, especially in absence of subdividing the image data into regions. This method allows for the full image to be transferred, with no modifications to existing communication protocols and hardware. Thus, there is no investigation into data modulation schemes or regions of interest based compression or modeling techniques. Instead, a mapping from a LR small-sized RGB (red green blue) image to a HR image is learned that compares to the original HR image with respect to PSNR and perceptual quality. Therefore, according to embodiments, the decoder is trained to upsample the image data with respect to optimization of the perceptual quality and pixel loss. These measures are suitable to overcome issues related to using only a pixel loss for recovering HR images. Pixel loss tends to produce over-smoothed results and lack detail of high-frequency content. Therefore, besides the pixel loss, a training of the neural network for perceptual quality is found to provide more natural looking images. A measure for pixel loss is the peak signal-to-noise ratio.

Furthermore, a system for transmitting image data using a waterborne sound signal is shown. The system comprises a waterborne sound transmitter and the waterborne sound receiver described above. The waterborne sound transmitter may be located on an underwater vehicle, e.g. an autonomous underwater vehicle (AUV) or a remotely operated underwater vehicle (ROV) or the like. The waterborne sound receiver may be arranged on a platform in the water, e.g. a watercraft, a base of an offshore wind turbine or the like. The waterborne sound transmitter comprises a data processing unit configured to obtain image data from an image capturing device, e.g. a camera, having a third resolution. Furthermore, the data processing unit is configured to downsample the image data having the third resolution as to obtain image data having the first resolution and compress the image data having the first resolution. The compression may be performed using known image compression algorithms such as a JPEG compression. This compression may be lossy compression in order to reduce the size footprint of the image data. The data processing unit forms a data stream for transmission of the image data having the first resolution using underwater communication. The third resolution may be identical to the second resolution. However, most often, the third resolution and the second resolution are not related to one another. The transmitting unit is configured to transmit the data stream to the waterborne sound receiver using the waterborne sound signal. The transmitting unit may be also referred to as hydrophone whereas the waterborne sound transmitter may also be referred to as underwater modem.

Here the original HR image may be bicubic down-sampled to a LR image. The LR image may also be referred to as thumbnail. The LR image may have a size footprint of about 1kB. This is within bandwidth limitations of most currently available modern high-speed mid-range acoustic modems for one or several image transfers per second. This LR image is input to the neural network, which predicts a HR image with spatial image-resolution scale-factors of e.g. x8 compared to the LR image.

According to embodiments with respect to the embodiments of the waterborne sound receiver, the image capturing device is configured to capture a sequence of at least 5, preferably at least 8, more preferably at least 10 or most preferably at least 14 images per second, where each image is provided as one image data. According to further embodiments, the data processing unit is configured to compress the image data to a size (footprint) of less than 1500 bytes, preferably less than 1100 bytes, more preferably less than 800 bytes or most preferably less than 500 bytes. In another embodiment, the data processing unit is configured to downsample the image data to the first resolution comprising at most 1025 pixel, preferably at most 600, more preferably at most 300 pixel. The downsampling may also be performed using another neural network.

Accordingly, a method for obtaining image data having a high resolution from a waterborne sound signal is disclosed. The method comprises the following steps: receiving the waterborne sound signal comprising compressed image data having a first resolution; converting the waterborne sound signal into a data stream; decoding the data stream as to obtain the compressed image data; upsampling the image data as to obtain image data having a second resolution which is higher than the first resolution, wherein the upsampling is performed using a neural network.

Furthermore, a method for transmitting image data using a waterborne sound signal is discloses. The method comprises the following steps: obtaining image data from a camera having a third resolution; downsampling the image data having the third resolution as to obtain image data having the first resolution; compress the image data having the first resolution; forming a data stream for transmission of the image data having the first resolution using underwater communication; transmit the data stream using the waterborne sound signal; receiving the waterborne sound signal comprising compressed image data having a first resolution; converting the waterborne sound signal into a data stream; decoding the data stream as to obtain the compressed image data; upsampling the image data as to obtain image data having a second resolution which is higher than the first resolution; wherein the upsampling is performed using a neural network.

Preferred embodiments are described below in more detail with respect to the figures, among which

Fig. 1a: shows a schematic block diagram of a system for transmitting image data using a waterborne sound signal;

Fig. 1b: shows a schematic block diagram of a processing of the system shown in Fig. 1a;

Fig. 2: shows a schematic block diagram of the generation and usage of the neural network;

Fig. 3: shows a schematic block diagram of the optimization of the neural network as part of the training.

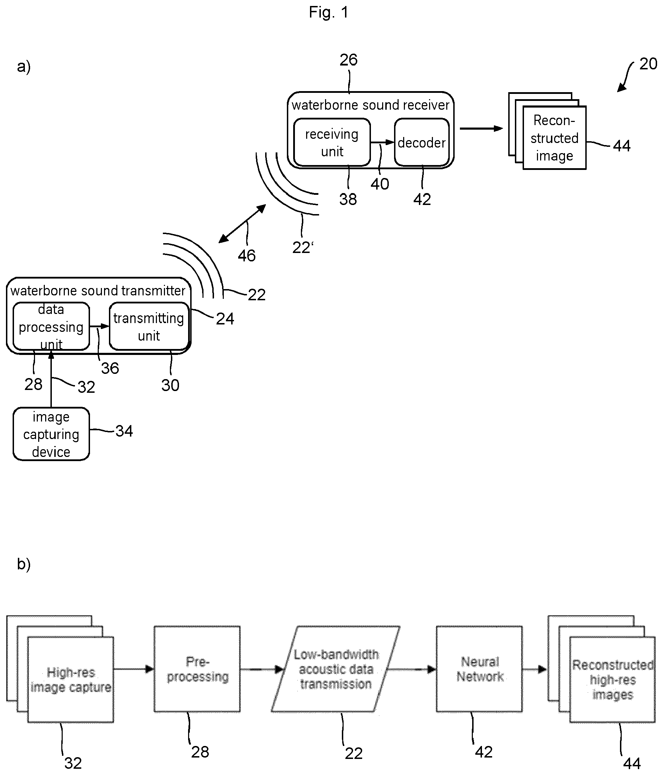

Fig. 1a shows a schematic block diagram of a system 20 for transmitting image data using a waterborne sound signal 22 focusing on the components of the system 20 wherein Fig. 1b shows a schematic block diagram of the processing steps of the system 20 shown in Fig. 1a. The system 20 comprises a waterborne sound transmitter 24 and a waterborne sound receiver 26.

The waterborne sound transmitter 24 comprises a data processing unit 28 and a transmitting unit 30. The data processing unit 28 obtains image data 32 from an image capturing device 34 having a third resolution and downsample the image data 32 having the third resolution as to obtain image data having a first resolution. This image data having the first resolution is further compressed by the data processing unit 28. Using the image data having the first resolution, the data processing unit forms a data stream 36 for transmission of the image data having the first resolution using underwater communication, i.e. the waterborne signal 22.

The transmitting unit 30 is configured to transmit the data stream 36 to the waterborne sound receiver 26 using the waterborne sound signal 22. A receiving unit 38 is configured to receive the waterborne sound signal 22 comprising the compressed image data having a first resolution and to convert the waterborne sound signal 22 into a data stream 40. A decoder 42 is configured to upsample the image data having the first resolution as to obtain image data 44 having a second resolution which is higher than the first resolution. E.g., from a 32x32 pixel LR image that is transmitted using the waterborne signal 22, a 256x256 pixel HR image 44 is obtained by upsampling. The decoder 42 is implemented as a neural network.

Arrow 46 indicates, that the waterborne sound receiver may also comprise a data processing and a transmission unit and the waterborne sound transmitter may also comprise a receiving unit and a decoder in order to establish a bidirectional communication using the further waterborne signal. 22'.

From the signal processing perspective, Fig. 1b shows the image data 32 having a third resolution as an input. The data processing unit 28 performs a pre-processing on the image data, comprising downsampling, compression and optionally a greyscale conversion. This pre-processed image data is transmitted using waterborne sound signal 22. The decoder 42, implemented as a neural network, receives the transmitted pre-processed image data and performs an upsampling on the received image data to obtain a high-resolution reconstructed image (having the second resolution) 44. Optionally, if a greyscale conversion is performed as part of the pre-processing, the decoder 42 may also perform a re-colorization of the received image data.

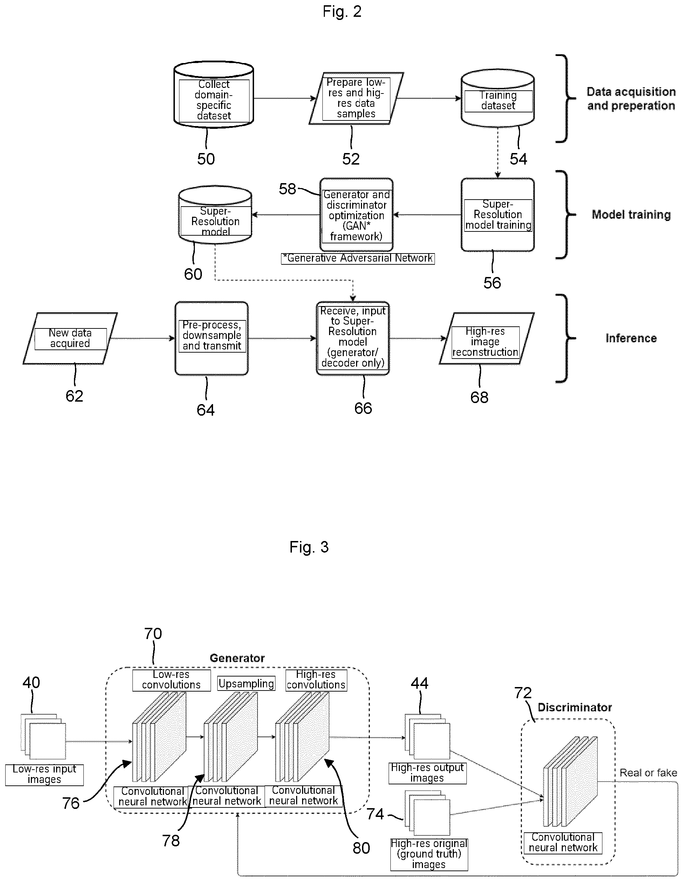

Fig. 2 shows a schematic block diagram of the lifecycle to obtain the decoder, i.e. the neural network, also referred to as model. During data acquisition and preparation, a dataset of images is created in block 50. From this image dataset, LR images are obtained in block 52, the original HR images are kept. This data forms the training dataset shown in block 54, whereas the training dataset may be subdivided in the actual training data and the validation data which is used to identify the performance of the neural network on newly presented data.

Thus, during model training, the training data is used to train the model in block 56, wherein after training, the performance of the model is measured using the validation data. This iterative process of training the model and measuring the models performance is performed in block 58. Further details are described with respect to Fig. 3. Output is the trained model of block 60.

Collected (block 62) and preprocessed (block 64) data can be input into this model (block 66) as to obtain the reconstructed HR image (block 68).

Fig. 3 shows a block diagram of the optimization of the neural network, i.e. the steps performed in block 58 of Fig. 2. During training, the neural network comprises two main parts, a generator 70 (G) and a discriminator 72 (D). In order to train a neural network for up-sampling an input from the LR image space 40 to the HR image-space, the method defines first a generative model 70 to produce estimations of the ground truth HR 74 image from the LR input image 40. Second, an adversarial (i.e. perceptual) model 72 adding to the loss of the training scheme and guide the generative model to produce more realistic looking and detailed images.

The LR input images are processed by the generator 70 that aims to recover the HR image. The adversarial discriminator 72 is given both the generated HR images 44 and the ground-truth HR images 74 to evolve and encourage the generator 70 to produce more realistic looking images with a perceptual quality superior to those obtained by minimizing a pixel-wise error measurement on the generator alone. Details of architecture and loss functions are given in the following.

Generator:

The generator 70 aims to estimate a super-resolved HR image from the LR input image 40. To do so, a convolutional neural network architecture is built, e.g. based on the generator proposed in section 3.1 of "ESRGAN: Enhanced Super-Resolution Generative Adversarial Networks", Wang et al, published September 17, 2018 (https://arxiv.org/pdf/1809.00219.pdf). It is taken advantage of residual learning in the LR image-domain (step 76), then up-sampling the image by an up-sampling function with learnable parameters (step 78), and finally refining the image by two sets of convolutions in the HR image-domain (step 80). Specifically, a set of 16 Residual-in-Residual Dense Blocks are used instead of 23 proposed in the disclosure mentioned above. Furthermore, the original interpolation functions are replaced with sub-pixel convolutions to up-sample from LR to HR using x8 scale factor instead of a x4 scale factor. An exemplary sub-pixel convolution is described in "Real-Time Single Image and Video Super-Resolution Using an Efficient Sub-Pixel Convolutional Neural Network", Shi et al, published September 23, 2016 (https://arxiv.org/pdf/1609.05158.pdf). In summary, this results in a "slimmer" version of the generator with the capability to learn the up-sampling functions rather than rely on interpolation, and with increased scaling factor to generate higher-resolution images. The output of the generator may be compared against the ground truth HR images by calculating the pixel-wise L1 error:

$$\mathcal{L}_{L_1}(G) = \mathbb{E}_{x,y}\left[\|y - G(x)\|_1\right]$$

where x is the input LR image, y is the HR ground truth image, and G is the generator.

Discriminator:

Optimizing the pixel-wise L1 (or L2) loss on the generator alone produces blurry results and lacks high-frequency detail. To encourage the generator to produce perceptually superior solutions and hence more detailed and realistic images, the adversarial discriminator 72 is added. An exemplary discriminator is shown in "Image-to-Image Translation with Conditional Adversarial Networks", Isola et al, published November 26, 2018 (https://arxiv.org/pdf/1611.07004.pdf). This motivates the discriminator to model high-frequency structure and therefore only penalize structure at the scale of local image patches. Hence, the discriminator aims to measure if each $N \times N$ image patch is more realistic than the real or fake one. However, it was found that the proposed batch normalization layers described in the disclosure above tend to introduce unwanted artifacts in image generation tasks. Therefore, batch normalization layers should be omitted. Furthermore, it is possible to introduce relativism in the loss scheme of the discriminator. Therefore the discriminator can be conditioned on the relativistic patch-wise least-squares error with GAN loss expressed as:

$$\mathcal{L}_{GAN}(D) = \mathbb{E}_y\left[\|D(y) - \overline{D}(G(x)) - 1\|_2^2\right] + \mathbb{E}_x\left[\|D(G(x)) - \overline{D}(y) + 1\|_2^2\right]$$

and

$$\mathcal{L}_{GAN}(G) = \mathbb{E}_y\left[\|D(y) - \overline{D}(G(x)) + 1\|_2^2\right] + \mathbb{E}_x\left[\|D(G(x)) - \overline{D}(y) - 1\|_2^2\right]$$

Where $\overline{D}(\cdot)$ denotes the average of the discriminator output.

Full Objective:

Combining the loss of the formulas above, the full objective can be expressed as:

$$\min_G \max_D \frac{1}{2}\left[\mathcal{L}_{GAN}(D) + \mathcal{L}_{GAN}(G)\right]\lambda + \mathcal{L}_{L_1}(G)$$

where $\lambda$ is a weighting factor.

Training Options:

HR images may have the spatial size 256 x 256 pixel, and LR images may obtain the spatial size 32 x 32 pixel by down-sampling HR images using e.g. bicubic interpolation. LR images may be further JPEG encoded, reducing the effective size-footprint from about 3 kB to about 1 kB. The training process may be divided into two stages. First, the generator may be trained only using pixel-wise L1 loss and thus maximize the PSNR. This model can be employed as initialization for the generator when training the GAN-based model. This is to obtain a more stable training process, as the discriminator will already receive relatively good images from the generator, and not start from pure noise. For all models, a learning rate of $1x10^4$ and a mini-batch size of 8 per GPU can be used. The Adam solver may be used for optimization with parameters $\beta1$ and $\beta2$ set to 0.9 and 0.999 respectively. The GAN-based model may use the weight parameter $\lambda = 1x10^{-2}$. By pre-training the generator, an average PSNR of 25.6 can be obtained, while bicubic up-sampling yields a PSNR of 23.3. However, as previously described, minimizing only the pixelwise error yields over-smoothed images that lack high-frequency detail. Hence the GAN-based model can be initialized with the pre-trained generator.

The disclosed transmitting unit and receiving unit are designed for use under water, especially in the sea. The receiving unit is designed to convert the waterborne sound signal into an electrical signal (e.g. voltage or current) corresponding to the sound pressure. The electrical signal is also referred to as data stream. Furthermore, the transmitting unit is designed to convert an applied electrical voltage (also referred to as data stream) into a waterborne sound signal. The sensor material of the transmitting unit and receiving unit may be a piezoelectric material, for example a piezoceramic. The sound transceivers are not suitable for medical applications.

Although some aspects have been described in connection with a device, it is understood that these aspects also represent a description of the corresponding process, so that a block or component of a device is also to be understood as a corresponding process step or as a feature of a process step. Similarly, aspects described in connection with or as a process step also represent a description of a corresponding block or detail or feature of a corresponding device.

The embodiments described above are merely an illustration of the principles of the present invention. It is understood that modifications and variations of the arrangements and details described herein will be obvious to other experts. It is therefore intended that the invention is limited only by the scope of the claims below and not by the specific details presented in the description and explanation of the examples herein.

List of reference signs:

| | |
|---|---|
| 20 | system |
| 22 | waterborne sound signal |
| 24 | waterborne sound transmitter |
| 26 | waterborne sound receiver |
| 28 | data processing unit |
| 30 | transmitting unit |
| 32 | image data having a third resolution |
| 34 | image capturing device |
| 36 | data stream |
| 38 | receiving unit |
| 40 | data stream |
| 42 | decoder |
| 44 | reconstructed image, i.e. image data having the second resolution |
| 46 | arrow |
| 50-68 | blocks of the lifecycle of the neural network |
| 70 | generator |
| 72 | discriminator |
| 74 | ground truth HR image |
| 76-80 | processing steps of the generator |

**Claims**

1.  A waterborne sound receiver (26) comprising:

    a receiving unit (38) configured to receive a waterborne sound signal (22) comprising compressed image data having a first resolution and to convert the waterborne sound signal (22) into a data stream (40) ; and
    a decoder (42) configured to decode the data stream (40) as to obtain the compressed image data;
    wherein the decoder (42) is configured to upsample the image data as to obtain image data having a second resolution which is higher than the first resolution, wherein the decoder (42) is implemented as a neural network.

2.  The waterborne sound receiver (26) according to claim 1,

wherein the waterborne sound signal (22) comprises a sequence of compressed image data, wherein one image data of the sequence of image data represents one image and wherein the sequence comprises at least 5, preferably at least 8, more preferably at least 10 or most preferably at least 14 compressed images per second, wherein the decoder is configured to decode the compressed images as to obtain a video signal of the second resolution from the sequence of compressed images.

3. The waterborne sound receiver (26) according to any of the preceding claims,
wherein a size of the compressed image data is less than 1500 bytes, preferably less than 1100 bytes, more preferably less than 800 bytes or most preferably less than 500 bytes.

4. The waterborne sound receiver according to any of the preceding claims,
wherein the decoder (42) is configured to upsample the image data at least 8 times, preferably at least 10 times, more preferably at least 14 times, most preferably at least 18 times as to obtain the image data having the second resolution.

5. The waterborne sound receiver (26) according to any of the preceding claims,
wherein the decoder (42) is trained to upsample the image data with respect to optimization of the perceptual quality and pixel loss.

6. The waterborne sound receiver (26) according to any of the preceding claims,
wherein the decoder (42) is configured to upsample the image data as a whole, especially in absence of subdividing the image data into regions.

7. The waterborne sound receiver (26) according to any of the preceding claims,
wherein the image data having the first resolution comprises at most 1025 pixel, preferably at most 600, more preferably at most 300 pixel.

8. A system (20) for transmitting image data using a waterborne sound signal (22), the system (20) comprising:
a waterborne sound transmitter (24) and the waterborne sound receiver (26) of any of the preceding claims, the waterborne sound transmitter (24) comprising:

   a data processing unit (28) configured to obtain image data from an image capturing device (34) having a third resolution, downsample the image data having the third resolution as to obtain image data having the first resolution, compress the image data having the first resolution and form a data stream (36) for transmission of the image data having the first resolution using underwater communication;
   a transmitting unit configured to transmit the data stream (36) to the waterborne sound receiver using the waterborne sound signal (22).

9. The system (20) according to claim 8,
wherein the image capturing device (34) is configured to capture a sequence of at least 5, preferably at least 8, more preferably at least 10 or most preferably at least 14 images per second, where each image is provided as one image data.

10. The system (20) according to any of claims 8 or 9,
wherein the data processing unit is configured to compress the image data to a size of less than 1500 bytes, preferably less than 1100 bytes, more preferably less than 800 bytes or most preferably less than 500 bytes.

11. The system (20) according to any of claims 8 to 10,
wherein the data processing unit (28) is configured to downsample the image data to the first resolution comprising at most 1025 pixel, preferably at most 600, more preferably at most 300 pixel.

12. The system (20) according to claim 11,
wherein the data processing unit is configured to downsample the image data using a neural network.

13. A method for obtaining image data having a high resolution from a waterborne sound signal, the method comprising the following steps:

   receiving the waterborne sound signal comprising compressed image data having a first resolution;

converting the waterborne sound signal into a data stream;
decoding the data stream as to obtain the compressed image data;
upsampling the image data as to obtain image data having a second resolution which is higher than the first resolution,
wherein the upsampling is performed using a neural network.

14. A method for transmitting image data using a waterborne sound signal, the method comprising the following steps:

obtaining image data from a camera having a third resolution;
downsampling the image data having the third resolution as to obtain image data having the first resolution;
compress the image data having the first resolution;
forming a data stream for transmission of the image data having the first resolution using underwater communication;
transmit the data stream using the waterborne sound signal;
receiving the waterborne sound signal comprising compressed image data having a first resolution;
converting the waterborne sound signal into a data stream;
decoding the data stream as to obtain the compressed image data;
upsampling the image data as to obtain image data having a second resolution which is higher than the first resolution;
wherein the upsampling is performed using a neural network.

Fig. 1

a)

b)

Fig. 2

Data acquisition and preperation

Collect domain-specific dataset
50

Prepare low-res and hig-res data samples
52

Training dataset
54

Model training

58
Generator and discriminator optimization (GAN* framework)

Super-Resolution model
60

Super-Resolution model training
56

*Generative Adversarial Network

Inference

New data acquired
62

Pre-process, downsample and transmit
64

Receive, input to Super-Resolution model (generator/ decoder only)
66

High-res image reconstruction
68

Fig. 3

70
Generator

40
Low-res input images

Low-res convolutions | Upsampling | High-res convolutions

Convolutional neural network | Convolutional neural network | Convolutional neural network

76          78          80

44
High-res output images

72
Discriminator

74
High-res original (ground truth) images

Convolutional neural network

Real or fake

Europäisches
Patentamt

European
Patent Office

Office européen
des brevets

# EUROPEAN SEARCH REPORT

Application Number

EP 20 19 8247

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| Y | CN 109 474 304 B (OCEAN UNIV CHINA) 18 August 2020 (2020-08-18) * page 1, paragraph 3 - page 4, paragraph 1; figures 1,2 * ----- | 1-14 | INV. H04B11/00 H04B13/02 H04N19/00 |
| Y | WO 2018/150083 A1 (NOKIA TECHNOLOGIES OY [FI]) 23 August 2018 (2018-08-23) * page 1 - page 13; figures 1-4 * * * ----- | 1-14 | |

TECHNICAL FIELDS
SEARCHED      (IPC)

H04B
H04N

The present search report has been drawn up for all claims

| Place of search | Date of completion of the search | Examiner |
|---|---|---|
| Munich | 26 February 2021 | Koch, Bernhard |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons
 
& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 20 19 8247

This annex lists the patent family members relating to the patent documents cited in  the above-mentioned European search report.
The members are as contained in the European Patent Office EDP file on
The European Patent Office is in no way liable for these particulars which are merely given for the purpose of information.

26-02-2021

| Patent document cited in search report | | Publication date | Patent family member(s) | | Publication date |
|---|---|---|---|---|---|
| CN 109474304 | B | 18-08-2020 | NONE | | |
| WO 2018150083 | A1 | 23-08-2018 | EP | 3583777 A1 | 25-12-2019 |
| | | | WO | 2018150083 A1 | 23-08-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG et al.** *ESRGAN: Enhanced Super-Resolution Generative Adversarial Networks,* 17 September 2018, https://arxiv.org/pdf/1809.00219.pdf
- **SHI et al.** *Real-Time Single Image and Video Super-Resolution Using an Efficient Sub-Pixel Convolutional Neural Network,* 23 September 2016, https://arxiv.org/pdf/1609.05158.pdf
- **ISOLA et al.** *Image-to-Image Translation with Conditional Adversarial Networks,* 26 November 2018, https://arxiv.org/pdf/1611.07004.pdf